# EUROPEAN PATENT APPLICATION

(11) **EP 4 216 623 A1**
(43) Date of publication of application: **26.07.2023**
(21) Application number: 23151257.5
(22) Date of filing: 12.01.2023
(51) Int. Cl.: H04W 60/04

(54) **SELECTION OF A CURRENT TRACKING AREA IDENTIFIER AMONG MULTIPLE CURRENT TRACKING AREA IDENTIFIERS**

(30) Priority: 24.01.2022 US 202263302142 P; 30.12.2022 US 202218092203
(71) Applicant: MediaTek Singapore Pte. Ltd., Singapore 138628 (SG)
(72) Inventor: NIEMI, Marko, Oulu (FI)
(74) Representative: Hoefer & Partner Patentanwälte mbB

(57) **Abstract**

Examples pertaining to selection of a current tracking area identifier, TAI, among multiple current TAIs in non-terrestrial network, NTN, communications are described. A user equipment, UE, initiates a procedure in a satellite-accessing cell of a selected public land mobile network, PLMN, (410). The UE selects a tracking area code, TAC, from a plurality of TAGs of the selected PLMN broadcast by the cell as a current TAC such that a tracking area identifier, TAI, constructed from the current TAC and a PLMN identifier, PLMN ID, of the selected PLMN, is a current TAI associated with a geographical area in which the UE is located (420).

## Description

### CROSS REFERENCE TO RELATED PATENT APPLICATION(S)

The present disclosure is part of a non-provisional application claiming the priority benefit of U.S. Patent Application No. 63/302,142, filed 24 January 2022, the content of which herein being incorporated by reference in its entirety.

### TECHNICAL FIELD

The present disclosure is generally related to mobile communications and, more particularly, to selection of a current tracking area identifier (TAI) among multiple current TAIs in non-terrestrial network (NTN) communications.

### BACKGROUND

Unless otherwise indicated herein, approaches described in this section are not prior art to the claims listed below and are not admitted as prior art by inclusion in this section.

The term Global Navigation Satellite System (GNSS) generally refers to any satellite constellation that provides positioning, navigation, and timing (PNT) services on a global or regional basis. For example, each of the Global Positioning System (GPS), GLONASS, Galileo and Beidou is a type of GNSS. In operation, tracking area codes (TACs) in an NTN are fixed to respective geographical location(s) on the Earth and location information of a user equipment (UE) can be used for TAI selection when updating a TAC of a public land mobile network (PLMN) based on a geographical area. The network may broadcast a maximum of 12 TACs per New Radio (NR) NTN cell per PLMN, including the same or different PLMNs. The access stratum (AS) layer indicates to the non-access stratum (NAS) layer all received TACs per PLMN.

As the satellite continues to move relative to a UE on the Earth, the satellite broadcasts different sets of TACs at different times. For example, at time T1, the satellite may broadcast TAC1, TAC2 and TAC3 for PLMN1; at time T2, the satellite may broadcast TAC2, TAC3 and TAC4 for PLMN1; at time T3, the satellite may broadcast TAC3, TAC4 and TAC5 for PLMN1; and at time T4, the satellite may broadcast TAC4, TAC5 and TAC6 for PLMN1. Correspondingly, at time T2, with the UE being in a cell of area TAC3, the AS layer indicates to the NAS layer TAC3, TAC2 and TAC4 of PLMN1; and at time T3, with the UE being in a cell of area TAC4, the AS layer indicates to the NAS layer TAC4, TAC3 and TAC5 of PLMN1. As can be seen, there is an issue with respect to selecting a current TAC of a given PLMN based on the geographical area. Therefore, there is a need for a solution of selection of a current TAI among multiple current TAIs in NTN communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

One objective of the present disclosure is propose schemes, concepts, designs, systems, methods and apparatus pertaining to selection of a current TAI among multiple current TAIs in NTN communications. It is believed that the above-described issue would be avoided or otherwise alleviated by implementing one or more of the proposed schemes described herein. A method and an apparatus according to the invention are defined in the independent claims. The dependent claims define preferred embodiments thereof.

In one aspect, a method may involve a processor of an apparatus (e.g., UE) initiating a procedure with a satellite-accessing cell of a network, in particular a selected PLMN. The method may also involve the processor constructing a TAI of the cell or a list of TAIs of the cell depending on whether the cell broadcasts one or more than one TACs per PLMN. Alternatively or additionally, the method may also involve the processor selecting a TAC from a plurality of TACs of the selected PLMN broadcast by the cell as a current TAC such that a TAI, constructed from the current TAC and a PLMN identifier (PLMN ID) of the selected PLMN, is a current TAI associated with a geographical area in which the UE is located.

In another aspect, an apparatus may include a transceiver and a processor coupled to the transceiver. The transceiver may be configured to communicate wirelessly with a network, in particular a selected PLMN. The processor may initiate, via the transceiver, a procedure with a satellite-accessing cell of the network. The processor may construct a TAI of the cell, considering this TAI also as a current TAI in an event that it is a TAI of the chosen PLMN, or a list of TAIs of the cell, considering the list of TAIs as list of current TAls in case those are TAIs of the chosen PLMN, depending on whether the cell indicates support for more than one TACs per PLMN; the processor may also receive, via the transceiver, either a reject message or an accept message from the network responsive to initiating the procedure. Alternatively or additionally, the processor may select a TAC from a plurality of TACs of the selected PLMN broadcast by the cell as a current TAC such that a TAI, constructed from the current TAC and a PLMN ID of the selected PLMN, is a current TAI associated with a geographical area in which the UE is located.

In a further aspect, a method may involve a processor of an apparatus (e.g., UE) initiating a NAS procedure with a satellite-accessing cell of a selected PLMN. The method may also involve the processor receiving assistance information from the selected PLMN. The method may also involve the processor selecting, with the assistance information, a TAC from a plurality of TACs of the selected PLMN broadcast by the cell as a current TAC such that a TAI, constructed from the current TAC and a PLMN ID of the selected PLMN, is a current TAI associated with a geographical area in which the UE is located. It is noteworthy that, although description provided herein may be in the context of certain radio access technologies, networks and network topologies such as 5^{th} Generation System (5GS) and 4G Evolved Packet System (EPS) mobile networking, the proposed concepts, schemes and any variation(s)/derivative(s) thereof may be implemented in, for and by other types of wireless and wired communication technologies, networks and network topologies such as, for example and without limitation, Ethernet, Universal Terrestrial Radio Access Network (UTRAN), Evolved UTRAN (E-UTRAN), Global System for Mobile communications (GSM), General Packet Radio Service (GPRS)/Enhanced Data rates for Global Evolution (EDGE) Radio Access Network (GERAN), Long-Term Evolution (LTE), LTE-Advanced, LTE-Advanced Pro, Internet-of-Things (IoT), Industrial IoT (IIoT), Narrow Band Internet of Things (NB-IoT), and any future-developed networking technologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example network environment in which various solutions and schemes in accordance with the present disclosure may be implemented.
FIG. 2 is a diagram of an example scenario under a proposed scheme in accordance with the present disclosure.
FIG. 3 is a block diagram of an example communication system in accordance with an implementation of the present disclosure.
FIG. 4 is a flowchart of an example process in accordance with an implementation of the present disclosure.
FIG. 5 is a flowchart of an example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to selection of a current TAI among multiple current TAIs in NTN communications. According to the present disclosure, a number of possible solutions may be implemented separately or jointly. That is, although these possible solutions may be described below separately, two or more of these possible solutions may be implemented in one combination or another.

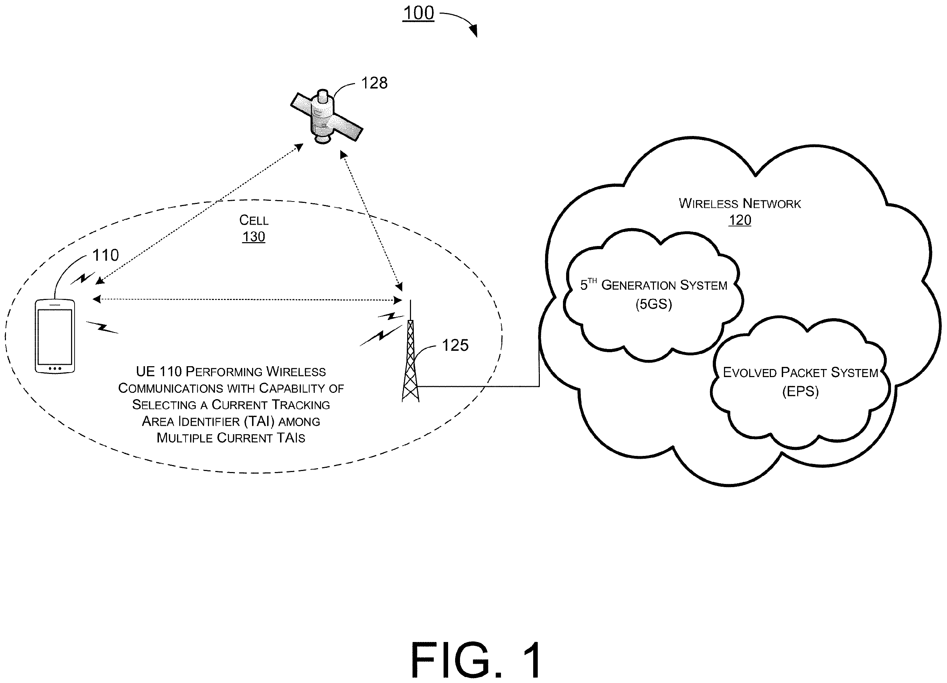

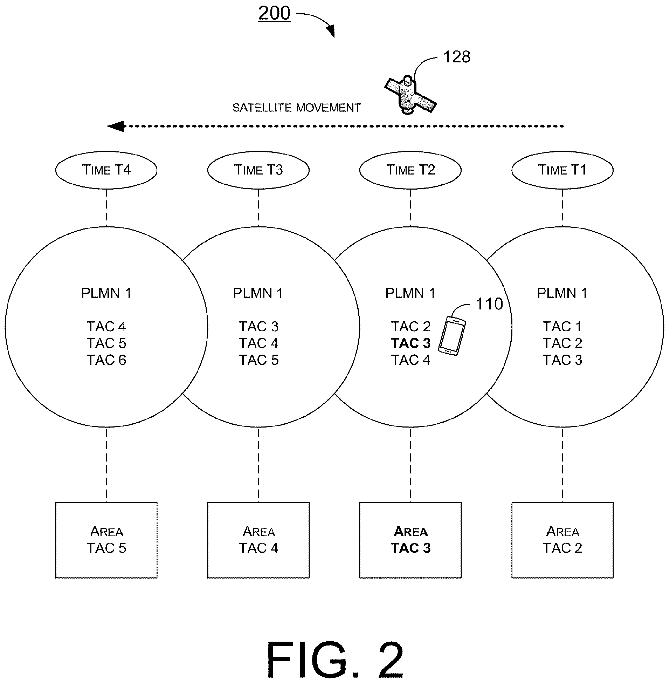

FIG. 1 illustrates an example network environment 100 in which various solutions and schemes in accordance with the present disclosure may be implemented. FIG. 2 ~ FIG. 5 illustrate examples of implementation of various proposed schemes in network environment 100 in accordance with the present disclosure. The following description of various proposed schemes is provided with reference to FIG. 1 ~ FIG. 5.

Referring to FIG. 1, network environment 100 may involve a UE 110 and a wireless network 120, which may include a 5^{th} Generation System (5GS) (and, optionally, an EPS). Depending on channel condition, availability and/or other factor(s), UE 110 may be in wireless communication with wireless network 120 via one or more terrestrial network nodes (e.g., base station(s) such as eNB, gNB and/or transmission/reception point (TRP)) and/or one or more non-terrestrial network nodes (e.g., satellite(s)). For simplicity in illustration and without limiting the scope of the present disclosure, UE 110 may be associated with or otherwise in communication with a cell 130 corresponding to a terrestrial network node 125 (e.g., gNB, eNB or TRP) and/or a non-terrestrial network node 128 (e.g., satellite) of wireless network 120. In network environment 100, UE 110 and wireless network 120 may implement various schemes pertaining to selection of a current TAI among multiple current TAIs in NTN communications in accordance with the present disclosure, as described below. It is noteworthy that, while the various proposed schemes may be individually or separately described below, in actual implementations each of the proposed schemes may be utilized individually or separately. Alternatively, some or all of the proposed schemes may be utilized jointly.

FIG. 2 illustrates an example scenario 200 under a proposed scheme in accordance with the present disclosure. In scenario 200, at the current location of UE 110 (e.g., in a network cell of area TAC3), the AS layer may indicate to the NAS layer TAC3, TAC2 and TAC4 for a network (e.g., PLMN1). Under the proposed scheme, UE 110 may initiate a procedure (e.g., an ATTACH procedure, a TRACKING AREA UPDATE procedure, or a REGISTRATION procedure) in this cell, and UE 110 may consider each of the TAIs as candidates for registration and one of the current TAIs as a main, anchor or current TAI correlating to the current geographical position/location of UE 110.

In an event that UE 110 does not receive any assistance information from the network, UE 110 may select the main, anchor or current TAI in a way according to the proposed scheme. For instance, UE 110 may consider that a TAC at a specific place in a list of TACs (e.g., the first TAC or another position) provided by the AS layer to the NAS layer (which may or may not be in the same order as a list of TACs broadcast by the cell) is to be selected as the current TAC (e.g., TAC3), so as to derived the current TAI (e.g., TAC3 + PLMN1 = current TAI), while other TAIs may be considered as registration candidates. Alternatively, it may be standardized that a TAC at a specific place in the list (e.g., the first TAC or another position) may correlate with the geographical location of the cell (and hence UE 110) and, thus, the TAC may be the best candidate of being selected for the current TAI. Still alternatively, each of the TAIs may be considered as a "regular" current TAI (e.g., equally current) until a successful completion of the procedure, at which time UE 110 may (optionally) select one of the TAIs as the current TAI.

In an event that the network (or cell broadcasting TAC + PLMN and/or TAI values) can provide UE 110 with assistance information for UE 110 to select the main, anchor or current TAI, UE 110 and the network may behave in a way according to the proposed scheme. For instance, in the system information broadcast by the cell, the cell may explicitly indicate that one of a plurality of TACs (e.g., the first TAC in the list) correlates with a current geographical location of the cell (and hence UE 110). This information may assist UE 110 (at the NAS layer) in selecting this TAC as the TAC to construct the current TAI (e.g., TAC3 + PLMN1 in scenario 200). Alternatively, the network may, over other AS signaling (e.g., in a downlink (DL) radio resource control (RRC) message), indicate the one of the plurality of TACs (e.g., TAC3) as the TAC from which UE 110 (at the NAS layer) may construct the current TAI or anchor TAI. Still alternatively, in response to the UE-initiated NAS procedure (e.g., an ATTACH procedure, a TRACKING AREA UPDATE procedure, or a REGISTRATION procedure), the network may indicate that a TAC is to be used in constructing the current TAI (e.g., TAC3 + PLMN1 in scenario 200).

Under the proposed scheme, upon a successful completion of the procedure (e.g., REGISTRATION), in case that UE 110 needs to indicate or otherwise store a last visited registered TAI, this TAI which is earlier selected as the current TAI may be considered as the last visited registered TAI.

Referring to FIG. 2, at time T2, UE 110 may be in a cell broadcasting TAC2, TAC3 and TAC4, and UE 110 may consider TAC3 as a TAC best representing the geographical area in which UE 110 is currently located. Accordingly, UE 110 may select TAC3 to construct a current TAI (e.g., TAC3 + PLMN1 = current TAI). The selection of TAC3 may be achieved or otherwise accomplished by UE implementation or by network assistance. After a successful completion of the procedure (or NAS procedure), the selected current TAI may be considered also as the last visited registered TAI.

### Illustrative Implementations

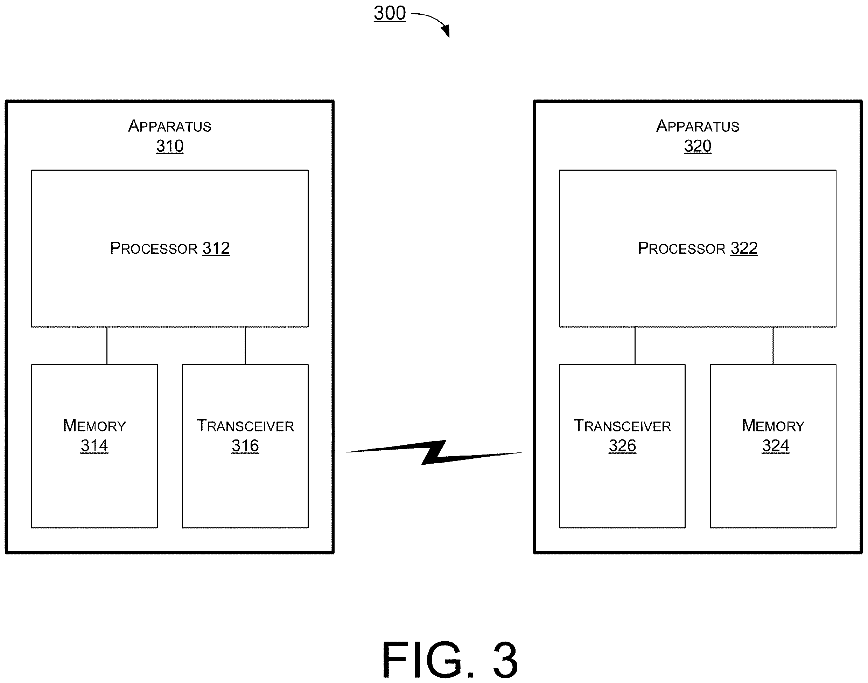

FIG. 3 illustrates an example communication system 300 having at least an example apparatus 310 and an example apparatus 320 in accordance with an implementation of the present disclosure. Each of apparatus 310 and apparatus 320 may perform various functions to implement schemes, techniques, processes and methods described herein pertaining to selection of a current TAI among multiple current TAIs in NTN communications, including the various schemes described above with respect to various proposed designs, concepts, schemes, systems and methods described above, including network environment 100, as well as processes described below.

Each of apparatus 310 and apparatus 320 may be a part of an electronic apparatus, which may be a network apparatus or a UE (e.g., UE 110), such as a portable or mobile apparatus, a wearable apparatus, a vehicular device or a vehicle, a wireless communication apparatus or a computing apparatus. For instance, each of apparatus 310 and apparatus 320 may be implemented in a smartphone, a smart watch, a personal digital assistant, an electronic control unit (ECU) in a vehicle, a digital camera, or a computing equipment such as a tablet computer, a laptop computer or a notebook computer. Each of apparatus 310 and apparatus 320 may also be a part of a machine type apparatus, which may be an IoT apparatus such as an immobile or a stationary apparatus, a home apparatus, a roadside unit (RSU), a wire communication apparatus or a computing apparatus. For instance, each of apparatus 310 and apparatus 320 may be implemented in a smart thermostat, a smart fridge, a smart door lock, a wireless speaker or a home control center. When implemented in or as a network apparatus, apparatus 310 and/or apparatus 320 may be implemented in an eNodeB in an LTE, LTE-Advanced or LTE-Advanced Pro network or in a gNB or TRP in a 5G network, an NR network or an loT network.

In some implementations, each of apparatus 310 and apparatus 320 may be implemented in the form of one or more integrated-circuit (IC) chips such as, for example and without limitation, one or more single-core processors, one or more multi-core processors, one or more complex-instruction-set-computing (CISC) processors, or one or more reduced-instruction-set-computing (RISC) processors. In the various schemes described above, each of apparatus 310 and apparatus 320 may be implemented in or as a network apparatus or a UE. Each of apparatus 310 and apparatus 320 may include at least some of those components shown in FIG. 3 such as a processor 312 and a processor 322, respectively, for example. Each of apparatus 310 and apparatus 320 may further include one or more other components not pertinent to the proposed scheme of the present disclosure (e.g., internal power supply, display device and/or user interface device), and, thus, such component(s) of apparatus 310 and apparatus 320 are neither shown in FIG. 3 nor described below in the interest of simplicity and brevity.

In one aspect, each of processor 312 and processor 322 may be implemented in the form of one or more single-core processors, one or more multi-core processors, or one or more CISC or RISC processors. That is, even though a singular term "a processor" is used herein to refer to processor 312 and processor 322, each of processor 312 and processor 322 may include multiple processors in some implementations and a single processor in other implementations in accordance with the present disclosure. In another aspect, each of processor 312 and processor 322 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 312 and processor 322 is a special-purpose machine specifically designed, arranged and configured to perform specific tasks including those pertaining to selection of a current TAI among multiple current TAIs in NTN communications in accordance with various implementations of the present disclosure.

In some implementations, apparatus 310 may also include a transceiver 316 coupled to processor 312. Transceiver 316 may be capable of wirelessly transmitting and receiving data. In some implementations, transceiver 316 may be capable of wirelessly communicating with different types of wireless networks of different radio access technologies (RATs). In some implementations, transceiver 316 may be equipped with a plurality of antenna ports (not shown) such as, for example, four antenna ports. That is, transceiver 316 may be equipped with multiple transmit antennas and multiple receive antennas for multiple-input multiple-output (MIMO) wireless communications. In some implementations, apparatus 320 may also include a transceiver 326 coupled to processor 322. Transceiver 326 may include a transceiver capable of wirelessly transmitting and receiving data. In some implementations, transceiver 326 may be capable of wirelessly communicating with different types of UEs/wireless networks of different RATs. In some implementations, transceiver 326 may be equipped with a plurality of antenna ports (not shown) such as, for example, four antenna ports. That is, transceiver 326 may be equipped with multiple transmit antennas and multiple receive antennas for MIMO wireless communications.

In some implementations, apparatus 310 may further include a memory 314 coupled to processor 312 and capable of being accessed by processor 312 and storing data therein. In some implementations, apparatus 320 may further include a memory 324 coupled to processor 322 and capable of being accessed by processor 322 and storing data therein. Each of memory 314 and memory 324 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 314 and memory 324 may include a type of read-only memory (ROM) such as mask ROM, programmable ROM (PROM), erasable programmable ROM (EPROM) and/or electrically erasable programmable ROM (EEPROM). Alternatively, or additionally, each of memory 314 and memory 324 may include a type of non-volatile random-access memory (NVRAM) such as flash memory, solid-state memory, ferroelectric RAM (FeRAM), magnetoresistive RAM (MRAM) and/or phase-change memory. Alternatively, or additionally, each of memory 314 and memory 324 may include a UICC.

Each of apparatus 310 and apparatus 320 may be a communication entity capable of communicating with each other using various proposed schemes in accordance with the present disclosure. For illustrative purposes and without limitation, a description of capabilities of apparatus 310, as a UE (e.g., UE 110), and apparatus 320, as a network node (e.g., terrestrial network node 125 or non-terrestrial network node 128) of a wireless network (e.g., wireless network 120), is provided below.

Under certain proposed schemes in accordance with the present disclosure with respect to selection of a current TAI among multiple current TAIs in NTN communications, processor 312 of apparatus 310, implemented in or as UE 110, may initiate, via transceiver 316, a procedure in a satellite-accessing cell (e.g., cell 130) of a network (e.g., via apparatus 320 as terrestrial network node 125 or non-terrestrial network node 128 of wireless network 120) as a selected PLMN of UE 110. Moreover, processor 312 may select a TAC from a plurality of TACs of the selected PLMN broadcast by the cell as a current TAC such that a TAI, constructed from the current TAC and a PLMN identifier (PLMN ID) of the selected PLMN, is a current TAI associated with a geographical area in which the UE is located.

In some implementations, processor 312 may consider the current TAI as a last visited registered TAI at a successful completion of the procedure.

In some implementations, in selecting, processor 312 may select one of the plurality of TACs of the selected PLMN from a first, a last or another specific place in a listing the plurality of TACs. For instance, the selected one of the plurality of TACs from the first, last or another specific place in the listing of the plurality of TACs may be considered as a TAC corresponding to a current geographical location of apparatus 310. In some implementations, the listing of the plurality of TACs may be provided by an AS layer to a NAS layer in a same or different order as the plurality of TACs broadcast by the cell. In such cases, an order of TACs in the listing of the plurality of TACs may be predefined.

In some implementations, in selecting, processor 312 may select one of the plurality of TACs corresponding a better one (e.g., more up-to-date and/or more accurate) of a current geographical location of the cell or a current geographical location of apparatus 310.

In some implementations, in selecting, processor 312 may perform certain operations. For instance, processor 312 may consider each TAI of the selected PLMN of a plurality of candidate TAIs corresponding to the plurality of TACs of the selected PLMN as being equally current. Additionally, processor 312 may complete the procedure. Moreover, at a successful completion of the procedure, processor 312 may select one of a plurality of the TAIs as the current TAI and considering the current TAI as a last visited registered TAI.

In some implementations, the procedure may include an ATTACH procedure, a TRACKING AREA UPDATE procedure, or a REGISTRATION procedure.

Under other proposed schemes in accordance with the present disclosure with respect to selection of a current TAI among multiple current TAIs in NTN communications, processor 312 of apparatus 310, implemented in or as UE 110, may initiate, via transceiver 316, a NAS procedure with a satellite-accessing cell (e.g., cell 130) of a network (e.g., via apparatus 320 as terrestrial network node 125 or non-terrestrial network node 128 of wireless network 120) as a selected PLMN of UE 110. Additionally, processor 312 may receive, via transceiver 316, assistance information from the selected PLMN (e.g., via apparatus 320). Furthermore, processor 312 may select a TAC from a plurality of TACs of the selected PLMN broadcast by the cell as a current TAC such that a TAI, constructed from the current TAC and a PLMN ID of the selected PLMN, is a current TAI associated with a geographical area in which the UE is located.

In some implementations, in receiving the assistance information, processor 312 may receive system information broadcast by the cell indicating that one of the plurality of TACs of the selected PLMN or a plurality of TAIs correlates to a geographical location of the cell or the UE. In such cases, in selecting, processor 312 may select the indicated one of the plurality of TACs as the current TAI.

In some implementations, in receiving the assistance information, processor 312 may receive an AS signaling from the cell indicating that one of the plurality of TACs based on which the UE constructs the current TAI.

In some implementations, in receiving the AS signaling, processor 312 may receive a DL RRC message.

In some implementations, in receiving the assistance information, processor 312 may receive, responsive to initiating the NAS procedure, a response message from the cell indicating that one of the plurality of TACs is the current TAI.

In some implementations, the NAS procedure may include an ATTACH procedure, a TRACKING AREA UPDATE procedure, or a REGISTRATION procedure.

### Illustrative Processes

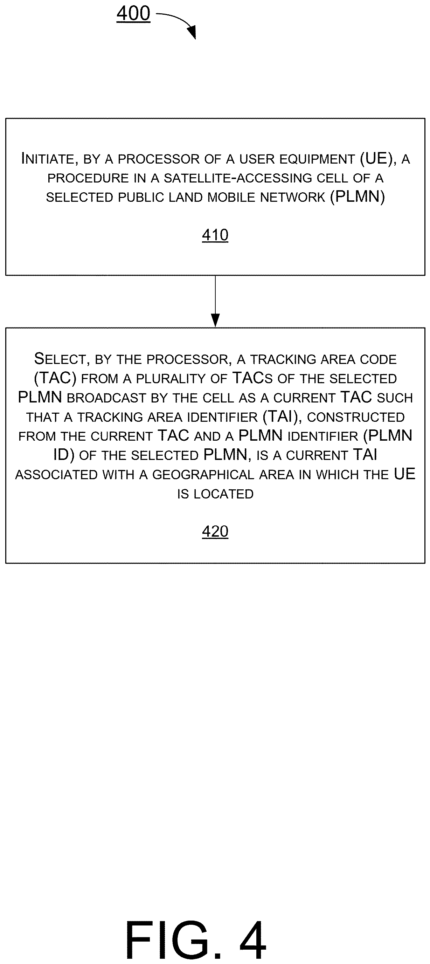

FIG. 4 illustrates an example process 400 in accordance with an implementation of the present disclosure. Process 400 may represent an aspect of implementing various proposed designs, concepts, schemes, systems and methods described above, whether partially or entirely, including those described above. More specifically, process 400 may represent an aspect of the proposed concepts and schemes pertaining to selection of a current TAI among multiple current TAIs in NTN communications. Process 400 may include one or more operations, actions, or functions as illustrated by one or more of blocks 410, 420 and 430. Although illustrated as discrete blocks, various blocks of process 400 may be divided into additional blocks, combined into fewer blocks, or eliminated, depending on the desired implementation. Moreover, the blocks/sub-blocks of process 400 may be executed in the order shown in FIG. 4 or, alternatively in a different order. Furthermore, one or more of the blocks/sub-blocks of process 400 may be executed iteratively. Process 400 may be implemented by or in apparatus 310 and apparatus 320 as well as any variations thereof. Solely for illustrative purposes and without limiting the scope, process 400 is described below in the context of apparatus 310 as a UE (e.g., UE 110) and apparatus 320 as a communication entity such as a network node or base station (e.g., network node 125) of a network (e.g., wireless network 120). Process 400 may begin at block 410.

At 410, process 400 may involve processor 312 of apparatus 310, implemented in or as UE 110, initiating, via transceiver 316, a procedure with a satellite-accessing cell (e.g., cell 130) of a network (e.g., via apparatus 320 as terrestrial network node 125 or non-terrestrial network node 128 of wireless network 120) as a selected PLMN of UE 110. Process 400 may proceed from 410 to 420.

At 420, process 400 may involve processor 312 selecting a TAC from a plurality of TACs of the selected PLMN broadcast by the cell as a current TAC such that a TAI, constructed from the current TAC and a PLMN identifier (PLMN ID) of the selected PLMN, is a current TAI associated with a geographical area in which the UE is located.

In some implementations, process 400 may further involve processor 312 considering the current TAI as a last visited registered TAI at a successful completion of the procedure.

In some implementations, in selecting, process 400 may involve processor 312 selecting one of the plurality of TACs of the selected PLMN from a first, a last or another specific place in a listing the TACs. For instance, the selected one of the plurality of TACs from the first, last or another specific place in the listing of the plurality of TACs may be considered as a TAC corresponding to a current geographical location of apparatus 310. In some implementations, the listing of the plurality of TACs may be provided by an AS layer to a NAS layer in a same or different order as the plurality of TACs broadcast by the cell. In such cases, an order of TACs in the listing of the plurality of TACs may be predefined.

In some implementations, in selecting, process 400 may involve processor 312 selecting one of the plurality of TACs corresponding a better one (e.g., more up-to-date and/or more accurate) of a current geographical location of the cell or a current geographical location of apparatus 310.

In some implementations, in selecting, process 400 may involve processor 312 performing certain operations. For instance, process 400 may involve processor 312 considering each TAI of the selected PLMN of a plurality of candidate TAIs corresponding to the plurality of TACs of the selected PLMN as being equally current. Additionally, process 400 may involve processor 312 completing the procedure. Moreover, at a successful completion of the procedure, process 400 may involve processor 312 selecting one of a plurality of the TAIs as the current TAI and considering the current TAI as a last visited registered TAI.

In some implementations, the procedure may include an ATTACH procedure, a TRACKING AREA UPDATE procedure, or a REGISTRATION procedure.

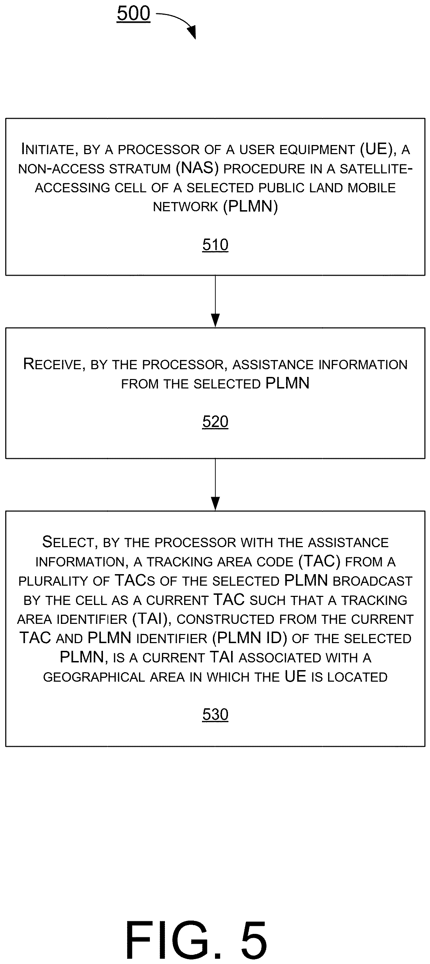

FIG. 5 illustrates an example process 500 in accordance with an implementation of the present disclosure. Process 500 may represent an aspect of implementing various proposed designs, concepts, schemes, systems and methods described above, whether partially or entirely, including those described above. More specifically, process 500 may represent an aspect of the proposed concepts and schemes pertaining to selection of a current TAI among multiple current TAIs in NTN communications. Process 500 may include one or more operations, actions, or functions as illustrated by one or more of blocks 510, 520 and 530. Although illustrated as discrete blocks, various blocks of process 500 may be divided into additional blocks, combined into fewer blocks, or eliminated, depending on the desired implementation. Moreover, the blocks/sub-blocks of process 500 may be executed in the order shown in FIG. 5 or, alternatively in a different order. Furthermore, one or more of the blocks/sub-blocks of process 500 may be executed iteratively. Process 500 may be implemented by or in apparatus 310 and apparatus 320 as well as any variations thereof. Solely for illustrative purposes and without limiting the scope, process 500 is described below in the context of apparatus 310 as a UE (e.g., UE 110) and apparatus 320 as a communication entity such as a network node or base station (e.g., network node 125) of a network (e.g., wireless network 120). Process 500 may begin at block 510.

At 510, process 500 may involve processor 312 of apparatus 310, implemented in or as UE 110, initiating, via transceiver 316, a NAS procedure with a satellite-accessing cell (e.g., cell 130) of a network (e.g., via apparatus 320 as terrestrial network node 125 or non-terrestrial network node 128 of wireless network 120) as a selected PLMN of UE 110. Process 500 may proceed from 510 to 520.

At 520, process 500 may involve processor 312 receiving, via transceiver 316, assistance information from the selected PLMN (e.g., via apparatus 320). Process 500 may proceed from 520 to 530.

At 530, process 500 may involve processor 312 selecting a TAC from a plurality of TACs of the selected PLMN broadcast by the cell as a current TAC such that a TAI, constructed from the current TAC and a PLMN ID of the selected PLMN, is a current TAI associated with a geographical area in which the UE is located.

In some implementations, in receiving the assistance information, process 500 may involve processor 312 receiving system information broadcast by the cell indicating that one of the plurality of TACs of the selected PLMN or a plurality of TAIs correlates to a geographical location of the cell or the UE. In such cases, in selecting, process 500 may involve processor 312 selecting the indicated one of the plurality of TACs as the current TAI.

In some implementations, in receiving the assistance information, process 500 may involve processor 312 receiving an AS signaling from the cell indicating that one of the plurality of TACs based on which the UE constructs the current TAI.

In some implementations, in receiving the AS signaling, process 500 may involve processor 312 receiving a DL RRC message.

In some implementations, in receiving the assistance information, process 500 may involve processor 312 receiving, responsive to initiating the NAS procedure, a response message from the cell indicating that one of the plurality of TACs is the current TAI.

In some implementations, the NAS procedure may include an ATTACH procedure, a TRACKING AREA UPDATE procedure, or a REGISTRATION procedure.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
initiating, by a processor of a user equipment, in the following also referred to as UE, a procedure in a satellite-accessing cell of a selected public land mobile network, in the following also referred to as PLMN, (410); and
selecting, by the processor, a tracking area code, in the following also referred to as TAC, from a plurality of TACs of the selected PLMN broadcast by the cell as a current TAC such that a tracking area identifier, in the following also referred to as TAI, constructed from the current TAC and a PLMN identifier, in the following also referred to as PLMN ID, of the selected PLMN, is a current TAI associated with a geographical area in which the UE is located (420).

2. An apparatus (310) implementable in a user equipment, in the following also referred to as UE, comprising:
a transceiver (316) configured to communicate wirelessly with a selected public land mobile network, in the following also referred to as PLMN; and
a processor (312) coupled to the transceiver (316) and configured to perform operations comprising:
initiating, via the transceiver (316), a procedure in a satellite-accessing cell of the network; and
selecting, by the processor (312), a tracking area code, in the following also referred to as TAC, from a plurality of TACs of the selected PLMN broadcast by the cell as a current TAC such that a tracking area identifier, in the following also referred to as TAI, constructed from the current TAC and a PLMN identifier, in the following also referred to as PLMN ID, of the selected PLMN, is a current TAI associated with a geographical area in which the UE is located.

3. The method of Claim 1, further comprising:
considering the current TAI as a last visited registered TAI at a successful completion of the procedure; or
the apparatus (310) of Claim 2, wherein the processor (312) is further configured to consider the current TAI as a last visited registered TAI at a successful completion of the procedure.

4. The method of Claim 1 or 3, or the apparatus of Claim 2 or 3, wherein the selecting comprises selecting one of the plurality of TACs of the selected PLMN from a first, a last or another specific place in a listing the plurality of TACs, and wherein the selected one of the plurality of TACs from the first, last or another specific place in the listing of the plurality of TACs is considered as a TAC corresponding to a current geographical location of the UE.

5. The method or the apparatus of Claim 4, wherein the listing of the plurality of TACs is provided by an access stratum, in the following also referred to as AS, layer to a non-access stratum, in the following also referred to as NAS, layer in a same or different order as the plurality of TACs broadcast by the cell, and wherein an order of TACs in the listing of the plurality of TACs is predefined.

6. The method of any one of Claims 1 and 3 to 5, or the apparatus of any one of Claims 2 to 5, wherein the selecting comprises selecting one of the plurality of TACs corresponding a better of a current geographical location of the cell or a current geographical location of the UE.

7. The method of any one of Claims 1 and 3 to 6, or the apparatus of any one of Claims 2 to 6, wherein the selecting comprises:
considering each TAI of the selected PLMN of a plurality of candidate TAIs corresponding to the plurality of TACs of the selected PLMN as being equally current;
completing the procedure; and
at a successful completion of the procedure, selecting one of a plurality of the TAIs as the current TAI and considering the current TAI as a last visited registered TAI.

8. The method of any one of Claims 1 and 3 to 7, or the apparatus of any one of Claims 2 to 7, wherein the procedure comprises an ATTACH procedure, a TRACKING AREA UPDATE procedure, or a REGISTRATION procedure.

9. The method of any one of Claims 1 and 3 to 8, further comprising:
receiving, by the processor, assistance information from the selected PLMN (520), wherein the procedure is a non-access stratum, in the following also referred to as NAS, procedure, and the selecting is performed by the processor with the assistance information; or
the apparatus (310) of any one of Claims 2 to 8, wherein the processor (312) is further configured to receive assistance information from the selected PLMN, wherein the procedure is a NAS procedure, and the selecting is performed by the processor with the assistance information.

10. The method or the apparatus of Claim 9, wherein the receiving of the assistance information comprises receiving system information broadcast by the cell indicating that one of the plurality of TACs of the selected PLMN or a plurality of TAIs correlates to a geographical location of the cell or the UE, and wherein the selecting comprises selecting the indicated one of the plurality of TACs as the current TAI.

11. The method or the apparatus of Claim 9 or 10, wherein the receiving of the assistance information comprises receiving an access stratum, in the following also referred to as AS, signaling from the cell indicating that one of the plurality of TACs based on which the UE constructs the current TAI.

12. The method or the apparatus of Claim 11, wherein the receiving of the AS signaling comprises receiving a downlink, in the following also referred to as DL, radio resource control, in the following also referred to as RRC, message.

13. The method or the apparatus of any one of Claims 9 to 12, wherein the receiving of the assistance information comprises receiving, responsive to initiating the NAS procedure, a response message from the network indicating that one of the plurality of TACs is the current TAI.
